# EUROPEAN PATENT APPLICATION

(11) **EP 4 391 424 A1**
(43) Date of publication of application: **26.06.2024**
(21) Application number: 23190253.7
(22) Date of filing: 08.08.2023
(51) Int. Cl.: H04J 3/06

(54) **METHOD AND DEVICE FOR TIME SYNCHRONIZATION OF TIME SYNCHRONIZATION DOMAINS**

(30) Priority: 19.12.2022 US 202263433487 P; 15.03.2023 TW 112109593
(71) Applicant: Moxa Inc., New Taipei City 242 (TW)
(72) Inventor: Liu, Chi-Chuan, 242 New Taipei City (TW); Lin, Chun-Yu, 242 New Taipei City (TW); Lai, Chien-Yu, 242 New Taipei City (TW); Lin, Po-Hung, 242 New Taipei City (TW)
(74) Representative: Straus, Alexander

(57) **Abstract**

A time synchronization method for a plurality of time synchronization domains (12_1-12 4) includes building a plurality of precision time protocol, called FTP hereinafter, instances (16_1-16_4) corresponding to the plurality of time synchronization domains; determining a grandmaster clock; and synchronizing, by the plurality of PTP instances, timings of the plurality of time synchronization domains according to the grandmaster clock.

## Description

### Field of the Invention

The present invention relates to a method and a device for time synchronization, and more particularly, to a method and a device for automatically determining a grandmaster clock and performing time synchronization in multiple time synchronization network domains.

### Background of the Invention

Precision Time Protocol (PTP) is a standard for time synchronization defined by IEEE 1588, and is used to achieve high-precision time synchronization throughout a time-critical network. As the market evolves, different network applications have unique requirements. To address this, many different PTP profiles have been proposed for different applications, such as Power Profile (IEEE Std C37. 238) for power networks, Telecom Profile (ITU-T G. 82 65. 1) for telecommunication networks, and Generalized Precision Time Protocol (gPTP, IEEE Std 802.1AS). PTP profiles allow applications in different fields to set specific operating parameters, attributes, and default values to meet their requirements. However, this can make it difficult for devices and networks using different PTP profiles to communicate effectively. In general, in order to ensure time synchronization, apparatuses or devices in the same environment must use the same PTP profile, making cross-domain time integration challenging.

The conventional technology integrates multiple types of PTP profiles through a time gateway so that different time synchronization domains or devices using different types of PTP profiles may synchronize time according to a specified grandmaster (GM) clock. In this method, the grandmaster clock is designated manually to a best clock in a specific domain. In this situation, when the grandmaster clock fails, it may lead to that there is no substitute clock for the grandmaster clock or the grandmaster clock is replaced by a clock without expected performance.

Therefore, there is a need for improvement in this art. It is needed to automatically determine an optimal clock immediately to replace the grandmaster clock for performing time synchronization while the grandmaster clock fails.

### Summary of the Invention

Therefore, the present invention aims to provide a method and a device for selecting an optimal grandmaster clock among multiple time synchronization domains for time synchronization, so as to improve the disadvantages of conventional techniques.

This is achieved by a time synchronization method according to the independent claim 1 or a time synchronization device according to the independent claim 2 here below. The dependent claims pertain to corresponding further developments and improvements.

As will be seen more clearly from the detailed description following below, a time synchronization method is disclosed herein. The time synchronization method, which is used for a plurality of time synchronization domains, includes building a plurality of precision time protocol (PTP) instances corresponding to the plurality of time synchronization domains; determining a grandmaster clock; and synchronizing, by the plurality of PTP instances, timings of the plurality of time synchronization domains according to the grandmaster clock.

In another aspect of the invention, a time synchronization device is disclosed in the detailed description here below. The time synchronization device, which is used for a plurality of time synchronization domains, includes a processing unit and a storage unit. The processing unit is configured to execute a program code. The storage unit is coupled to the processing unit and configured to store the program code to instruct the processing unit to execute a time synchronization method. The time synchronization method includes building a plurality of precision time protocol instances (PTP instances) corresponding to the plurality of time synchronization domains; determining a grandmaster clock; and synchronizing, by the plurality of PTP instances, timings of the plurality of time synchronization domains according to the grandmaster clock.

### Brief Description of the Drawings

FIG. 1 is a schematic diagram of a time synchronization network system comprising a plurality of time synchronization domains according to an embodiment of the present invention.
FIG. 2 is a flowchart of a time synchronization method according to an embodiment of the present invention.
FIG. 3 is a schematic diagram of a logical architecture of a time synchronization device according to an embodiment of the present invention.
FIG. 4 is a flowchart of an update process according to an embodiment of the present invention.
FIG. 5 is a schematic diagram of a logical architecture of a time synchronization device according to an embodiment of the present invention.
FIG. 6 is a flowchart of an update process according to an embodiment of the present invention.
FIG. 7 is a schematic diagram of a logical architecture of a time synchronization device according to an embodiment of the present invention.
FIG. 8 is a flowchart of an update process according to an embodiment of the present invention.
FIG. 9A and FIG. 9B are schematic diagrams of a grandmaster clock election method according to an embodiment of the present invention.
FIG. 10 is a schematic diagram of a network device according to an embodiment of the present invention.

### Detailed Description

Certain terms are used throughout the description and following claims to refer to particular components. As one skilled in the art will appreciate, hardware manufacturers may refer to a component by different names. This document does not intend to distinguish between components that differ in name but not function. In the following description and in the claims, the terms "include" and "comprise" are utilized in an open-ended fashion, and thus should be interpreted to mean "include, but not limited to".

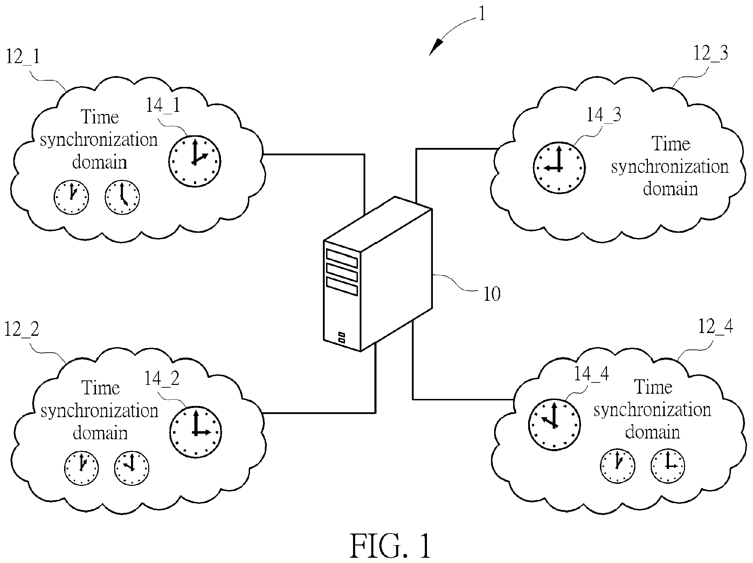

Please refer to FIG. 1, which is a schematic diagram of a time synchronization network system 1 according to an embodiment of the present invention. The time synchronization network system 1 comprises time synchronization domains 12_1-12_4 and a time synchronization device 10. The time synchronization domains 12_1-12_4 may be time synchronization domains operating according to specifications of different types of precision time protocol profiles (PTP Profile), wherein each time synchronization domain may be a wired network, a wireless network, or a combination thereof. Moreover, each of the time synchronization domains 12_1-12_4 may be a network domain composed of multiple devices and multiple network switches (including a plurality of clocks), or a network domain composed of a single device (with only one clock) . The time synchronization device 10 may be and not limited to network devices such as gateways, switches, routers, and bridges running in the time synchronization domain, and respectively connect to the time synchronization domains 12_1-12_4 through a plurality of communication ports (not shown in FIG. 1). The time synchronization domains 12_1-12_4 perform time synchronization through a time synchronization device 10 according to a time synchronization method, and thereby all devices and apparatuses in the time synchronization domains 12_1-12_4 synchronize on the basis of the clock time of the same grandmaster clock. In addition, in the time synchronization network system 1, the amount of the time synchronization domains 12_1-12_4 is 4, which is only for illustration. The time synchronization device 10 in the embodiment of the present invention may be applied for time synchronization among any number of time synchronization domains, and not limited to this.

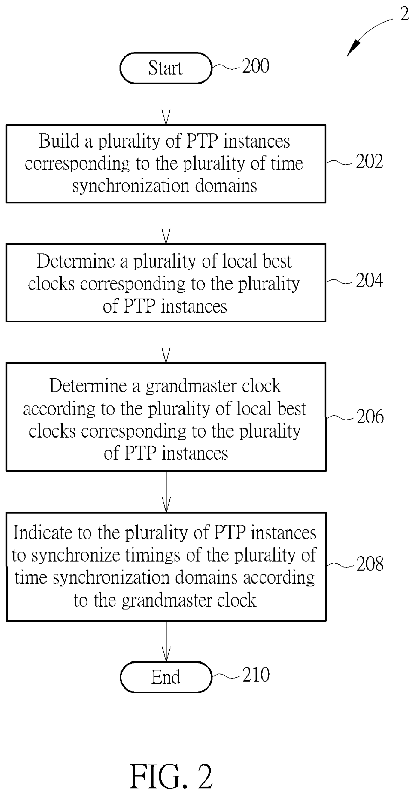

It should be noted that without the time synchronization device 10, each of the time synchronization domains 12_1-12_4 runs time synchronization mechanisms according to different PTP profiles, and therefore, the cross-domain time synchronization cannot be performed. In this situation, each time synchronization domain has a best clock (such as local best clocks 14_1-14_4 in FIG. 1) as a grandmaster clock for each time synchronization domain. That is to say, the devices belonging to the same time synchronization domain respectively perform time synchronization on the basis of the same grandmaster clock of the time synchronization domain which the devices belong to. The best clock refers to the most ideal clock (for a specific time synchronization domain) evaluated based on factors such as clock source, time accuracy, and stability of an oscillator, and may also be determined manually as the most suitable clock (for a specific time synchronization domain) . The time synchronization device 10 in the embodiment of the present invention aims for executing an automatic time synchronization method so as to integrate the timing among different time synchronization domains, and thereby all devices of the time synchronization network system 1 may synchronize with a grandmaster clock. The time synchronization method may be summarized to a process 2 shown in FIG. 2. The process 2 comprises the following steps:
Step 200: Start.
Step 202: Build a plurality of PTP instances corresponding to the plurality of time synchronization domains.
Step 204: Determine a plurality of local best clocks corresponding to the plurality of PTP instances.
Step 206: Determine a grandmaster clock according to the plurality of local best clocks corresponding to the plurality of PTP instances.
Step 208: Indicate to the plurality of PTP instances to synchronize timings of the plurality of time synchronization domains according to the grandmaster clock.
Step 210: End.

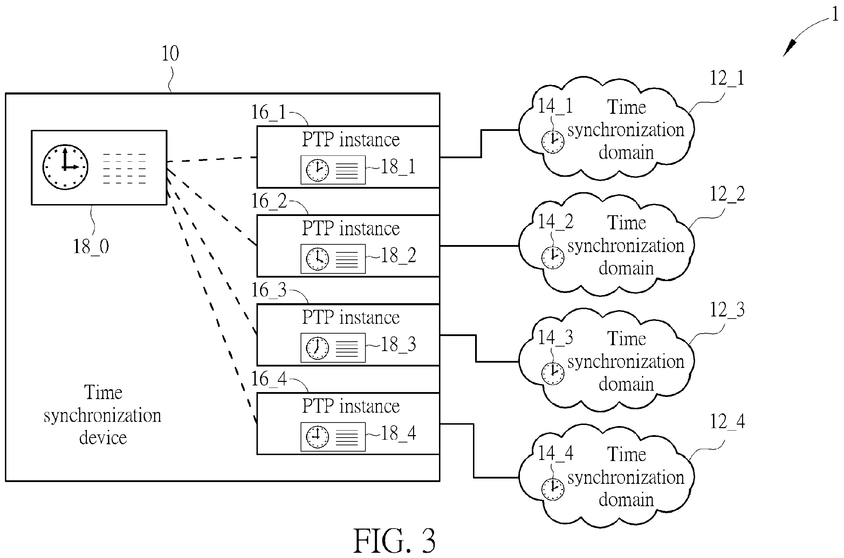

Please also refer to FIG. 3, which is a logical architecture diagram of the time synchronization device 10 according to an embodiment of the present invention. According to the process 2, the time synchronization device 10 first builds corresponding PTP instances 16_1-16_4 for the time synchronization domains 12_1-12_4 respectively (Step 202), and determines the local best clocks 14_1-14_4 corresponding to the PTP instances 16_1-16_4 (Step 204). Next, the time synchronization device 10 determines a grandmaster clock according to the local best clocks 14_1-14_4 (Step 206), and the grandmaster clock is used as a basis for time synchronization of all devices in the time synchronization domains 12_1-12_4. Finally, the time synchronization device 10 notifies the PTP instances 16_1-16_4 to synchronize the time of the time synchronization domains 12_1-12_4 according to the grandmaster clock (Step 208). Accordingly, all devices in the time synchronization domains 12_1-12_4 may run in the same time domain.

In detail, the PTP instances 16_1-16_4 built by the time synchronization device 10 in Step 202 use the same types of PTP profiles corresponding to the connected time synchronization domains 12_1-12_4, so the PTP instances 16_1-16_4 are capable of exchanging PTP messages with the connected time synchronization domains and serving as a communication medium between the time synchronization device 10 and the time synchronization domains 12_1-12_4. In other words, the time synchronization domains 12_1-12_4 may run according to different types of PTP profiles that are not limited to Telecom Profile (ITU-TG.8265.1), Power Profile (IEEE Std C37.238), Generalized Precision Time Protocol (gPTP), etc. The PTP instances 16_1-16_4 should operate according to the PTP profiles corresponding to the time synchronization domains 12_1-12_4 and should run as one node of the corresponding time synchronization domain.

In Step 204, each of the time synchronization domains 12_1-12_4 has a local best clock (14_1-14_4). When each network domain operates independently, each of the local best clocks 14_1-14_4 serves as a (local) grandmaster clock for each network domain and runs. The local best clocks 14_1-14_4 may be determined by a best master clock algorithm (BMCA), and the PTP instances 16_1-16_4 may obtain information of the local best clocks 14_1-14_4 of each domain through exchanging PTP messages with the corresponding time synchronization domains 12_1-12_4. Accordingly, the time synchronization device 10 may obtain the local best clocks 14_1-4_4 related to the time synchronization domains 12_1-12_4 and store clock information 18_1-18_4 of the local best clocks 14_1-14_4.

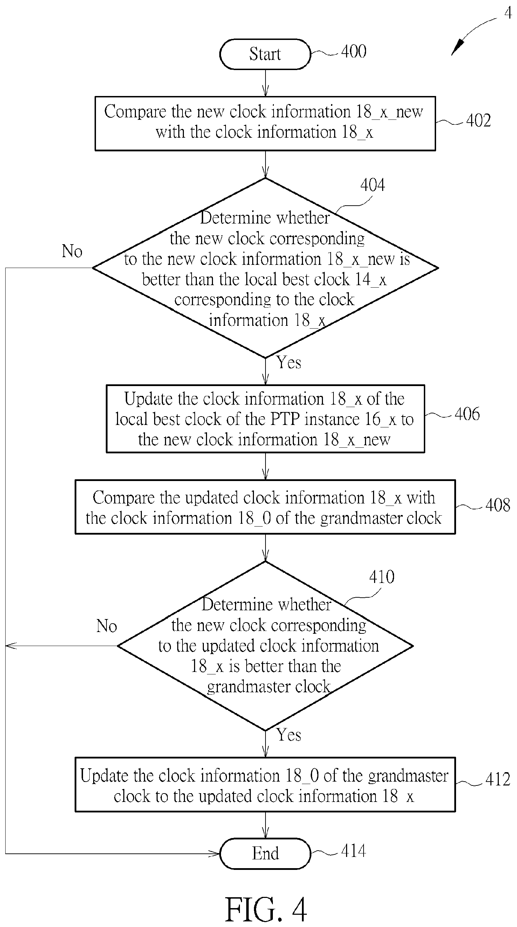

In Step 206, the time synchronization device 10 determines a grandmaster clock according to the clock information 18_1-18_4 of the local best clocks 14_1-14_4, and the grandmaster clock is used as the basis for time synchronization of all devices in the time synchronization domains 12_1-12_4. In an embodiment, the time synchronization device 10 may additionally have a global grandmaster clock information for storing a clock information 18_0 of the grandmaster clock. In an initialization phase of the time synchronization network system 1, the time synchronization device 10 may determine an optimal clock from the local best clocks 14_1-14_4 as the grandmaster clock of the time synchronization network system 1 according to a grandmaster clock election method, and store the clock information thereof in the clock information 18_0. During a running phase of the time synchronization network system 1, the PTP instances 16_1-16_4 continuously listen to the PTP messages, and the time synchronization device 10 may determine whether to update the grandmaster clock of the time synchronization network system 1 accordingly. For illustration purpose, assume that a clock information 18_x denotes the original clock information of any PTP instance 16_x in the PTP instances 16_1-16_4, which records the local best clock 14_x corresponding to the time synchronization domain 12_x, and assume that a local best clock 14_y among the local best clocks 14_1-14_4 denotes the optimal clock recorded in the clock information 18_0, which is corresponding to the time synchronization domain 12_y, wherein x and y may be the same or different. When the PTP instance 16_x receives a (PTP) announce message from a new clock corresponding to the time synchronization domain 12_x, and the announcement message includes a new clock information 18_x_new, the time synchronization device 10 may determine whether to update the grandmaster clock of the time synchronization network system 1 according to the new clock information 18_x_new in the announce message. The method for the time synchronization device 10 to determine whether to update the grandmaster clock of the time synchronization network system 1 may be summarized into an update process 4, as shown in FIG. 4. The update process 4 comprises the following steps:
Step 400: Start.
Step 402 : Compare the new clock information 18_x_new with the clock information 18_x.
Step 404: Determine whether the new clock corresponding to the new clock information 18_x_new is better than the local best clock 14_x corresponding to the clock information 18_x. If yes, go to Step 406; otherwise, go to Step 414.
Step 406: Update the clock information 18_x of the local best clock of the PTP instance 16_x to the new clock information 18_x_new, and proceed to Step 408.
Step 408: Compare the updated clock information 18_x with the clock information 18_0 of the grandmaster clock, and proceed to Step 410.
Step 410: Determine whether the new clock corresponding to the updated clock information 18_x is better than the grandmaster clock. If yes, go to Step 412; otherwise, go to Step 414.
Step 412: Update the clock information 18_0 of the grandmaster clock to the updated clock information 18_x.
Step 414: End.

In short, when any PTP instance 16_x receives an announce message about a new clock, the time synchronization device 10 needs to determine whether the new clock is better than the current grandmaster clock according to the clock information contained in the announce message. First, the clock information 18_x_new of the new clock needs to be compared with the clock information 18_x of the local best clock corresponding to the PTP instance 16_x (Step 402), so as to determine whether the new clock is better than the original local best clock 14_x based on the comparing result (Step 404). If yes, representing that the new clock is the optimal clock in the current time synchronization domain 12_x, the new clock should replace the original local best clock and update the clock information 18_x (Step 406); otherwise, the process ends. Next, the clock information 18_x_new of the new clock (the same as the updated clock information 18_x) needs to be further compared with the clock information 18_0 of the grandmaster clock (Step 408), to determine whether the new local best clock 14_x is better than the grandmaster clock based on the comparing result (Step 410). If yes, representing that the new clock is the optimal clock in the current time synchronization network system 1, the new clock should replace the original grandmaster clock and update the clock information 18_0 (Step 412); otherwise, the process ends.

In another embodiment, the time synchronization device 10 has a global grandmaster clock information for storing the clock information 18_0 of the grandmaster clock as mentioned in the above embodiment in Step 206. However, in the initialization phase of the time synchronization network system 1, the time synchronization system 10 does not need to determine the optimal clock as the grandmaster clock of the time synchronization network system 1 from the local best clocks 14_1-14_4 first, and may assign a null value (NULL) to the clock information 18_0. During the running phase of the time synchronization network system 1, the PTP instances 16_1-16_4 also continuously listen to the PTP messages. When a PTP instance 16_x among the PTP instances 16_1-16_4 receives an announce message from a new clock corresponding to the time synchronization domain 12_x, the time synchronization device 10 may determine whether to update the grandmaster clock of the time synchronization network system 1 according to the clock information of the new clock contained in the announce message. The method for the time synchronization device 10 to determine whether to update the grandmaster clock is the same as the update process 4 above. However, in Step 408, in the situation that the clock information 18_0 of the original grandmaster clock is assigned to be NULL, Step 412 may be directly executed to use the clock information of the new clock to replace the clock information 18_0 of the original grandmaster clock.

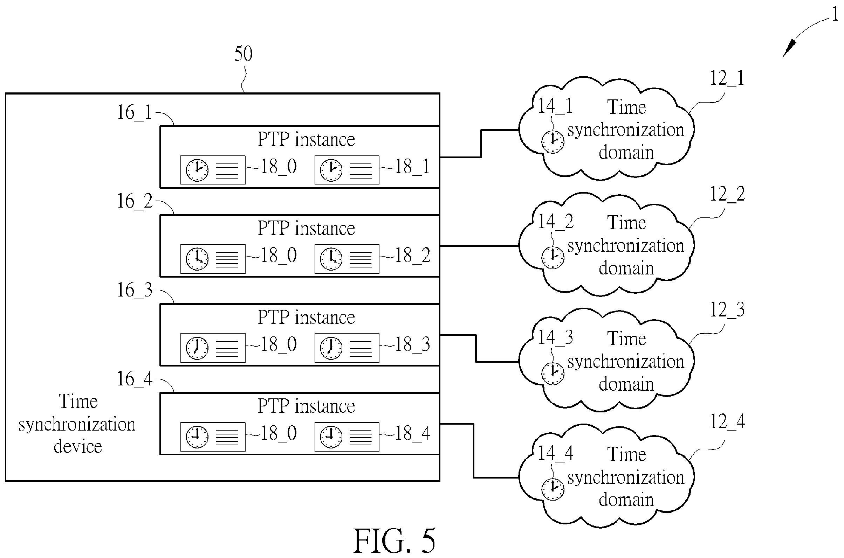

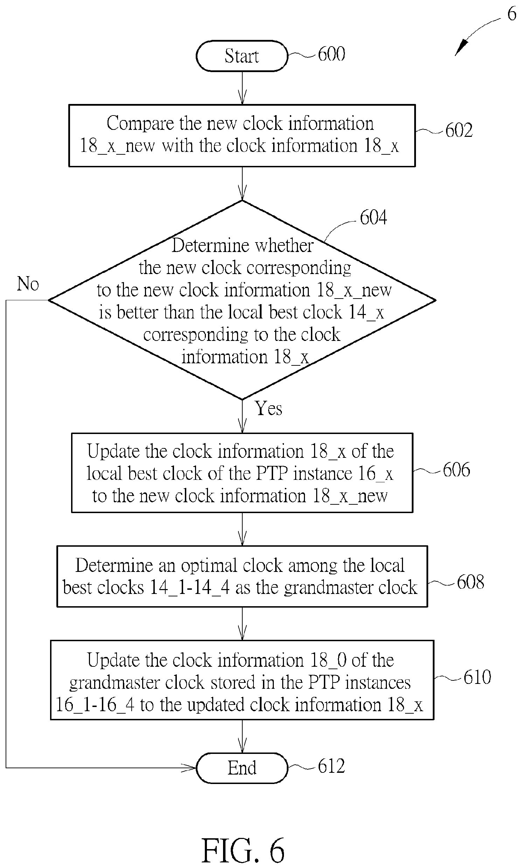

Please refer to FIG. 5, which is a logical architecture diagram of a time synchronization device 50 according to an embodiment of the present invention. The time synchronization device 50 may be used to replace the time synchronization device 10 in FIG. 3, so that the time synchronization domains 12_1-12_4 may run in the same time domain. In this embodiment, the time synchronization device 50 does not have the "global" grandmaster clock information used to store the clock information of the grandmaster clock as in the time synchronization device 10. On the contrary, the time synchronization device 50 stores the clock information 18_0 of the grandmaster clock in the PTP instances 16_1-16_4. In other words, in addition to the clock information 18_1-18_4 of the local best clocks 14_1-14_4, the PTP instances 16_1-16_4 also store the clock information 18_0 of the grandmaster clock. In the initialization phase of the time synchronization network system 1, the time synchronization device 50 may determine an optimal clock from the local best clocks 14_1-14_4 as the grandmaster clock of the time synchronization network system 1 according to the grandmaster clock election method, or may assign the NULL value to the clock information 18_0. During the running phase of the time synchronization network system 1, the PTP instances 16_1-16_4 may also continuously listen to the PTP messages, and the time synchronization device 50 may determine whether to update the grandmaster clock of the time synchronization network system 1 accordingly. As in the above example, assume that the clock information 18_x denotes the original clock information of any PTP instance 16_x in the PTP instances 16_1-16_4, which records the local best clock 14_x corresponding to the time synchronization domain 12_x. When the PTP instance 16_x receives an announce message from a new clock corresponding to the time synchronization domain 12_x, and the announcement message includes a new clock information 18_x_new, the time synchronization device 50 may determine whether to update the grandmaster clock of time synchronization network system 1 according to the new clock information 18_x_new in the announce message. The method for the time synchronization device 50 to determine whether to update the grandmaster clock of the time synchronization network system 1 may be summarized into an update process 6, as shown in FIG. 6. The update process 6 comprises the following steps:
Step 600: Start.
Step 602: Compare the new clock information 18_x_new with the clock information 18_x.
Step 604: Determine whether the new clock corresponding to the new clock information 18_x_new is better than the local best clock 14_x corresponding to the clock information 18_x. If yes, go to Step 606; otherwise, go to Step 612.
Step 606: Update the clock information 18_x of the local best clock of the PTP instance 16_x to the new clock information 18_x_new, and proceed to Step 608.
Step 608: Determine an optimal clock among the local best clocks 14_1-14_4 as the grandmaster clock, and proceed to Step 610.
Step 610: Update the clock information 18_0 of the grandmaster clock stored in the PTP instances 16_1-16_4 to the updated clock information 18_x.
Step 612: End.

In short, when any PTP instance 16_x receives an announce message about a new clock, the time synchronization device 50 needs to determine a new grandmaster clock according to the clock information contained in the announce message. First, the clock information 18_x_new of the new clock needs to be compared with the clock information 18_x of the local best clock corresponding to the PTP instance 16_x (Step 602), so as to determine whether the new clock is better than the original local best clock 14_x based on the comparing result (Step 604) . If yes, representing that the new clock is the optimal clock in the current time synchronization domain 12_x, the new clock should replace the original local best clock and update the clock information 18_x (Step 606); otherwise, the process ends. Next, according to the grandmaster clock election method, clock comparison is performed to determine an optimal clock among the local best clocks 14_1-14_4 as the new grandmaster clock (Step 608) . Finally, the clock information 18_0 in the PTP instances 16_1-16_4 is updated with the clock information of the new grandmaster (Step 610).

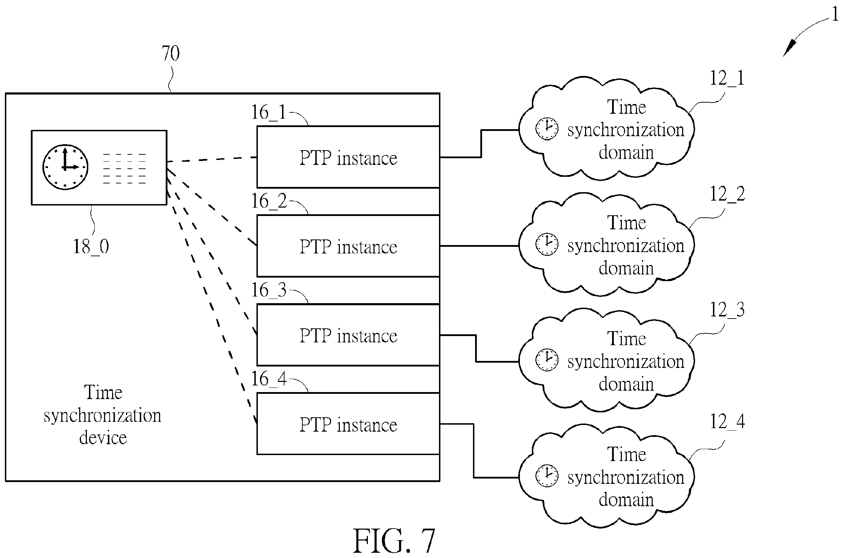

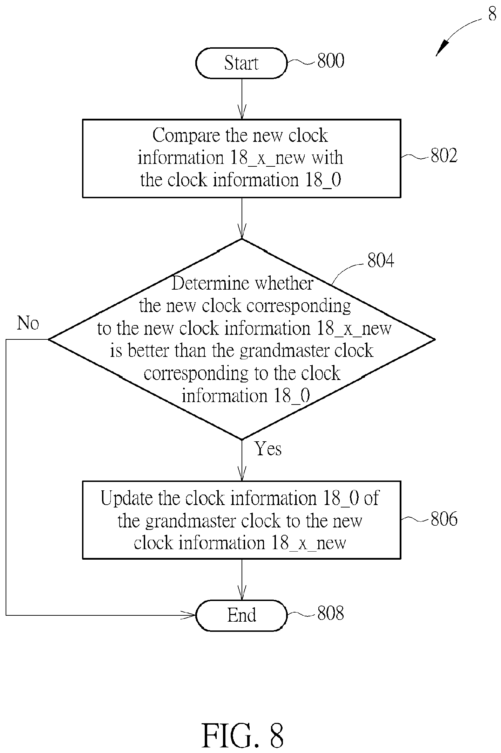

On the other hand, please refer to FIG. 7, which is a logical architecture diagram of a time synchronization device 70 according to an embodiment of the present invention. The time synchronization device 70 may be used to replace the time synchronization device 10 in FIG. 3 or the time synchronization device 50 in FIG. 5, so that the time synchronization domains 12_1-12_4 may run in the same time domain. In this embodiment, the time synchronization device 70 does not have the clock information 18_1-18_4 used to store the clock information of the local best clocks 14_1-14_4 as in the time synchronization device 10 or 50, but merely has a global grandmaster clock information for storing the clock information 18_0 of the grandmaster clock. In the initialization phase of the time synchronization network system 1, the time synchronization system 70 may assign a null value (NULL) to the clock information 18_0, or may select the best one of the defaultDS (Default Parameter Data Set) of the PTP instances 16_1-16_4 as the initial value of the clock information 18_0 according to the grandmaster clock election method. During the running phase of the time synchronization network system 1, the PTP instances 16_1-16_4 may also continuously listen to the PTP messages in Step 206, and the time synchronization device 70 may determine whether to update the grandmaster clock of the time synchronization network system 1 accordingly. As in the above example, when the PTP instance 16_x receives an announce message from a new clock corresponding to the time synchronization domain 12_x, and the announcement message includes a new clock information 18_x_new, the time synchronization device 70 may determine whether to update the grandmaster clock of the time synchronization network system 1 according to the new clock information 18_x_new in the announce message. The method for the time synchronization device 70 to determine whether to update the grandmaster clock of the time synchronization network system 1 may be summarized into an update process 8, as shown in FIG. 8. The update process 8 comprises the following steps:
Step 800: Start.
Step 802: Compare the new clock information 18_x_new with the clock information 18_0.
Step 804: Determine whether the new clock corresponding to the new clock information 18_x_new is better than the grandmaster clock corresponding to the clock information 18_0. If yes, go to Step 806; otherwise, go to Step 808.
Step 806: Update the clock information 18_0 of the grandmaster clock to the new clock information 18_x_new.
Step 808: End.

In short, when any PTP instance 16_x receives an announce message about a new clock, the time synchronization device 70 needs to determine whether to update the grandmaster clock according to the clock information contained in the announce message. First, the clock information 18_x_new of the new clock needs to be compared with the clock information 18_0 corresponding to the grandmaster clock (Step 802), to determine whether the new clock is better than the original grandmaster clock based on the comparing result (Step 804) . If yes, representing that the new clock is the optimal clock in the current time synchronization network system 1, the new clock should replace the original grandmaster clock and update the clock information 18_0 (Step 806); otherwise, the process ends.

After determining or updating the clock information 18_0 of the grandmaster clock in Step 206, the time synchronization device 10 needs to send a notification to all the PTP instances except the PTP instance 16_x in Step 208. The PTP instances 16_1-16_4 having received the notification may synchronize the time of the corresponding time synchronization domains 12_1-12_4 according to the clock information of the new clock contained in the notification. Accordingly, all devices in the time synchronization network system 1, including all devices connected to the time synchronization domains 12_1-12_4, may realize time synchronization according to a cross-domain grandmaster clock.

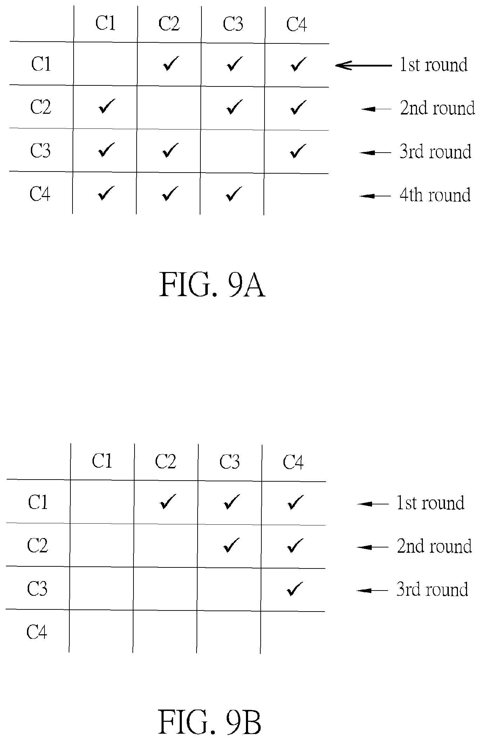

Specifically, in Step 206, the grandmaster clock election method for the time synchronization device 10 to determine the optimal clock as the grandmaster clock of the time synchronization network system 1 may refer to FIG. 9A and FIG. 9B. In detail, the time synchronization device 10 compares the clock information 18_1-18_4 of the local best clocks 14_1-14_4 to select the optimal clock. In an embodiment, as shown in FIG. 9A, C1-C4 respectively represent attributes of the local best clocks 14_1-14_4 (for example, obtained from the information recorded by the clock information 18_1-18_4, which is described in detail later). The time synchronization device 10 continuously compares any two of the attributes C1-C4 until one of the attributes C1-C4 is determined to be better than all other attributes. First, the first round of comparison is to compare the attribute C1 with the attributes C2-C4 of all other local best clocks. If the attribute C1 is better than the attributes C2-C4, the local best clock 14_1 corresponding to the attribute C1 may be determined to be the optimal clock and the process is finished; otherwise, the local best clock 14_1 corresponding to the attribute C1 may be determined to be not the optimal clock, and a second round of comparison is further performed. The second round of comparison is to compare the attribute C2 with the attributes C1, C3 and C4 of all other local best clocks. If the attribute C2 is better than the attributes C1, C3 and C4, the local best clock 14_2 corresponding to the attribute C2 may be determined to be the optimal clock and the process is finished; otherwise, the local best clock 14_2 corresponding to the attribute C2 may be determined to be not the optimal clock, and a third round of comparison is further performed. The comparison after the third round may be done in the same manner until the optimal clock is determined. The optimal clock determined according to the above process is used as the grandmaster clock of the time synchronization network system 1, and is used as the basis for time synchronization of all devices in the time synchronization network system 1.

In another embodiment, as shown in FIG. 9B, C1-C4 also respectively represent the attributes of the local best clocks 14_1-14_4. In this embodiment, the time synchronization device 10 continuously compares any two of the attributes C1-C4 without repetition until one of the attributes C1-C4 is determined to be better than all other attributes. First, the first round of comparison is to compare the attribute C1 with the attributes C2-C4 of all other local best clocks. If the attribute C1 is better than the attributes C2-C4, the local best clock 14_1 corresponding to the attribute C1 may be determined to be the optimal clock and the process is finished; otherwise, the local best clock 14_1 corresponding to the attribute C1 may be determined to be not the optimal clock, and a second round of comparison is further performed. The second round of comparison is to compare the attribute C2 with the attributes C3 and C4 of other local best clocks that have not been compared. If the attribute C2 is better than the attributes C3 and C4, the local best clock 14_2 corresponding to the attribute C2 may be determined to be the optimal clock and the process is finished; otherwise, the local best clock 14_2 corresponding to the attribute C2 may be determined to be not the optimal clock, and a third round of comparison is further performed. Finally, the third round of comparison is to compare the attribute C3 with the attribute C4 of the local best clock that has not been compared. If the attribute C3 is better than the attribute C4, the local best clock 14_3 corresponding to the attribute C3 may be determined to be the optimal clock and the process is finished; otherwise, the local best clock 14_4 corresponding to the attribute C4 may be determined to be the optimal clock. The optimal clock determined according to the above process is used as the grandmaster clock of the time synchronization network system 1, and is used as the basis for time synchronization of all devices in the time synchronization network system 1.

It should be noted that FIG. 9A and FIG. 9B show the feasible ways for the time synchronization device 10 to determine the optimal clock, but it is not limited thereto. Any method that is capable of automatically selecting an optimal cross-domain clock as the grandmaster clock of the time synchronization network system 1 from the local optimal clocks 14_1-14_4 corresponding to the time synchronization domains 12_1-12_4 may be applicable to the present invention.

Moreover, the above clock information 18_0-18_4 include but not limited to timePropertiesDS (Time Properties Parameter Data Set), parentDS (Parent Parameter Data Set) and corresponding priority vector (Time-synchronization Spanning Tree Priority Vector) related to the capability information of grandmaster clock. Therefore, the comparison of the above clock attributes (C1-C4) may be performed according to the priority vectors of the corresponding clock information. The parameters of the priority vector in the clock information include rootSystemIdentity, stepsRemoved, sourcePortIdentity, and portNumber of the receiving port, where rootSystemIdentity further includes parameters such as priority1, clockClass, clockAccuracy, offsetScaledLogVariance, priority2, and clockIdentity. The parameter names mentioned above may refer to the relevant definitions in IEEE 802.1AS-2020, and those skilled in the art should be able to understand the meanings thereof. In the embodiment of the present invention, the parameters of the priority vector are compared sequentially, and based on the policy that the smaller the value is, the better the clock is, and is not limited thereto.

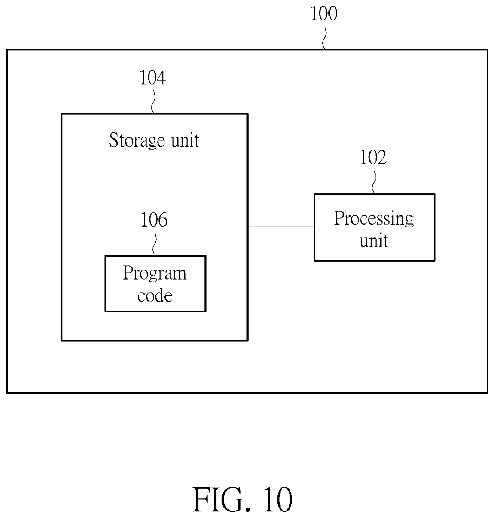

Furthermore, please refer to FIG. 10, which is a schematic diagram of a network device 100 according to an embodiment of the present invention. The network device 100 may be and not limited to network devices such as gateways, switches, routers, and bridges running in the time synchronization domain, and is used to implement the time synchronization devices 10, 50 and 70. As shown in FIG. 10, the network device 100 may comprise a processing unit 102 and a storage unit 104. The processing unit 102 may be a microprocessor or an application-specific integrated circuit (ASIC) . The storage unit 104 may be any type of data storage devices for storing a program code 106, and the program code 106 is read and executed by the processing unit 102. For example, the storage unit 104 may be a read-only memory (ROM), a flash memory, a random-access memory (RAM), a hard disk, an optical data storage device, a non-volatile storage unit, etc., and is not limited thereto.

The network device 100 is used to represent the necessary components required to implement the embodiments of the present invention, and those skilled in the art may make various modifications and adjustments accordingly, and is not limited to this. For example, when the network device 100 is applied to implement the time synchronization device 10, the process 2 for time synchronization method may be complied into the program code 106, stored in the storage unit 104, and executed by the processing unit 102. Moreover, the storage unit 104 is also used for storing the clock information 18_0-18_4 and data required for running the time synchronization method, and is not limited thereto.

In the prior art, different time synchronization domains or devices using different types of PTP profiles are synchronized according to a grandmaster clock designated manually. When the grandmaster clock fails, there may be no alternative grandmaster clock or the grandmaster clock may be replaced with a clock that may not perform as expected. In comparison, the present invention automatically determines the grandmaster clock and performs cross-domain time synchronization. Even when the grandmaster clock fails, the present invention may automatically replace the grandmaster clock with another clock with the best performance. Therefore, the reliability of the system and the operating performance are greatly improved.

In summary, the present invention provides a method and a device for time synchronization, which automatically determines the grandmaster clock for multiple heterogeneous time synchronization domains and performs cross-domain time synchronization to avoid problems that may occur when the grandmaster clock fails so as to improve the prior art.

## Claims

1. A time synchronization method, used for a plurality of time synchronization domains (12_1-12_4), the time synchronization method **characterized by** comprising:
building a plurality of precision time protocol, called PTP hereinafter, instances (16_1-16_4) corresponding to the plurality of time synchronization domains (12_1-12_4);
determining a grandmaster clock; and
synchronizing, by the plurality of PTP instances (16_1-16_4), timings of the plurality of time synchronization domains (12_1-12_4) according to the grandmaster clock.

2. A time synchronization device (10, 50, 70), used for a plurality of time synchronization domains (12_1-12_4), **characterized by** comprising:
a processing unit (102), configured to execute a program code (106); and
a storage unit (104), coupled to the processing unit (102), configured to store the program code (106) to instruct the processing unit (102) to execute a time synchronization method, wherein the time synchronization method comprises:
building a plurality of precision time protocol, called PTP hereinafter, instances (16_1-16_4) corresponding to the plurality of time synchronization domains (12_1-12_4);
determining a grandmaster clock; and
synchronizing, by the plurality of PTP instances (16_1-16_4), timings of the plurality of time synchronization domains (12_1-12_4) according to the grandmaster clock.

3. The time synchronization method of claim 1 or the time synchronization device (10, 50, 70) of claim 2, **characterized in that** the step of determining the grandmaster clock comprises:
determining a plurality of local best clocks (14_1-14_4) corresponding to the plurality of PTP instances (16_1-16_4); and
determining the grandmaster clock according to the plurality of local best clocks (14_1-14_4) corresponding to the plurality of PTP instances (16_1-16_4).

4. The time synchronization method or the time synchronization device (10, 50, 70) of claim 3, **characterized in that** the step of determine the plurality of local best clocks (14_1-14_4) corresponding to the plurality of PTP instances (16_1-16_4) is determining a best clock of each time synchronization domain of the plurality of time synchronization domain (12_1-12_4) according to a best master clock algorithm, called BMCA hereinafter, so as to determining the plurality of local best clocks (14_1-14_4) corresponding to the plurality of PTP instances (16_1-16_4).

5. The time synchronization method or the time synchronization device (10, 50, 70) of claim 3, **characterized in that** the step of determining the grandmaster clock according to the plurality of local best clocks (14_1-14_4) corresponding to the plurality of PTP instances (16_1-16_4) is continuously comparing any two local best clocks among the plurality of local best clocks (14_1-14_4) until one of the local best clocks is the best, and deciding the one of the local best clocks as the grandmaster clock.

6. The time synchronization method or the time synchronization device (10, 50, 70) of claim 5, **characterized in that** the step of continuously comparing any two local best clocks among the plurality of local best clocks (14_1-14_4) comprises not repetitively comparing any two local best clocks of the plurality of local best clocks (14_1-14_4).

7. The time synchronization method or the time synchronization device (10, 50, 70) of claim 5, **characterized in that** the step of continuously comparing any two local best clocks among the plurality of local best clocks (14_1-14_4) is continuously comparing priority vectors of any two local best clocks of the plurality of local best clocks (14_1-14_4).

8. The time synchronization method or the time synchronization device (10, 50) of claim 3, **characterized by** further comprising executing the following steps when a PTP instance of the plurality of PTP instances (16_1-16_4) receives an announce message from a first clock of a corresponding time synchronization domain (12_1-12_4) :
comparing the first clock with a local best clock (14_1-14_4) corresponding to the PTP instance (16_1-16_4);
replacing the local best clock (14_1-14_4) corresponding to the PTP instance (16_1-16_4) with the first clock in response to the first clock being better than the local best clock (14_1-14_4) corresponding to the PTP instance (16_1-16_4);
comparing the local best clock (14_1-14_4) updated by the first clock with the grandmaster clock;
replacing the grandmaster clock with the local best clock (14_1-14_4) updated by the first clock in response to the local best clock (14_1-14_4) updated by the first clock being better than the grandmaster clock; and
notifying the plurality of PTP instances (16_1-16_4) to synchronize the time of the plurality of time synchronization domains (12_1-12_4) according to the updated grandmaster clock.

9. The time synchronization method of claim 1 or the time synchronization device (70) of claim 2, **characterized by** further comprising executing the following steps when a PTP instance of the plurality of PTP instances (16_1-16_4) receives an announce message from a first clock of a corresponding time synchronization domain:
comparing the first clock with the grandmaster clock;
replacing the grandmaster clock with the first clock in response to the first clock being better than the grandmaster clock; and
notifying the plurality of PTP instances (16_1-16_4) to synchronize the time of the plurality of time synchronization domains (12_1-12_4) according to the updated grandmaster clock.

10. The time synchronization method of claim 1 or the time synchronization device (10, 50, 70) of claim 2, **characterized in that** the plurality of time synchronization domains (12_1-12_4) use different types of PTP profiles.
